Europäisches Patentamt

European Patent Office

Office européen des brevets

(19)

(11) Numéro de publication : **0 288 403 B1**

(12) **FASCICULE DE BREVET EUROPEEN**

(45) Date de publication du fascicule du brevet :
08.01.92 Bulletin 92/02

(51) Int. Cl.⁵ : **A01L 7/02**

(21) Numéro de dépôt : **88420133.6**

(22) Date de dépôt : **22.04.88**

(54) **Dispositif de réalisation d'un dispositif amortisseur pour sabots d'ongulés, notamment des chevaux.**

(30) Priorité : **23.04.87 FR 8706044**

(43) Date de publication de la demande :
**26.10.88 Bulletin 88/43**

(45) Mention de la délivrance du brevet :
**08.01.92 Bulletin 92/02**

(84) Etats contractants désignés :
**AT BE CH DE ES GB GR IT LI LU NL SE**

(56) Documents cités :
**DE-A- 2 159 500**
**FR-A- 2 422 330**
**GB-A- 254 386**
**GB-A- 1 096 415**

(73) Titulaire : **SOCIETE A. M. F. Société à Responsabilité Limitée**
**Rue du Nord Saint Ferreol d'Auroure**
**F-43330 Pont Salomon (FR)**

(72) Inventeur : **Techer, Jean François**
**Rue du Nord Saint Ferréol d'Auroure**
**F-43330 Pont Salomon (FR)**
Inventeur : **Onnis, Jean Philippe**
**15 rue de la Vierge**
**F-42100 Saint Etienne (FR)**

(74) Mandataire : **Dupuis, François**
**Cabinet Laurent et Charras, 3 Place de l'Hôtel-de-Ville, BP 203**
**F-42005 St. Etienne Cédex 1 (FR)**

Jouve, 18, rue Saint-Denis, 75001 PARIS

## Description

L'objet de l'invention se rattache au secteur technique de la maréchalerie.

Le sport équestre éprouve très rudement les chevaux dans les compétitions telles que le saut d'obstacles, l'endurance, l'attelage et les courses.

Toutes ces disciplines généralement pratiquées sur des terrains variés comme les sols battus, caillouteux, routes d'asphalte, entraînent rapidement, une usure prématurée des membres et spécifiquement des organes internes du pied du cheval.

Différentes études morphologiques sur les lois physiques du pied du cheval ont démontré la nécessité de l'appui de la fourchette du pied du cheval sur le sol. La fourchette est l'organe amortisseur externe, ce qui nécessite l'application d'une ferrure protégeant la sole du pied du cheval et absorbant les ondes de chocs dans des allures vives, répartissant ainsi les charges sur le membre, tout en favorisant l'adhérence sur le bitume et le pavé.

L'élasticité du pied du cheval consiste dans la propriété qu'il présente à se dilater en arrière au moment de l'appui de la fourchette sur le sol et de revenir à sa forme primitive au moment du lever.

La fourchette du pied du cheval, qui est proprement dit l'amortisseur externe du pied, est, par son développement, la gardienne de l'ouverture des talons, de la forme générale du pied et des organes qu'il renferme.

Ces organes intimement liés, composés de tissus feuilletés, fibro-cartilages, coussinet plantaire chorion de la fourchette et d'un plexus vasculaire très dense, jouent le rôle de pompe hydraulique, donc d'amortisseur au moment de l'appui.

Ces phénomènes d'amortissement et de fonctionnement de ces différents organes sont plus ou moins importants si la fourchette est ou n'est pas à l'appui. Soustraite du sol par défaut d'appui (accident ou épaisseur du fer) la fourchette et son chorion, le coussinet plantaire, s'atrophient, entraînant la contraction des tissus vivants contenus dans le sabot. Il en résulte un resserrement des régions postérieures de la boîte cornée, comprimant douloureusement les organes internes contre la troisième phalange. Des inflamations tissulaires apparaissent, créant des réactions pathologiques au niveau osseux, appelées ostéite. A ce stade de la maladie, le cheval se met à boiter et se trouve irrémédiablement condamné à la réforme, compte-tenu des lésions irréversibles installées.

On a proposé des systèmes d'amortissement sous forme de semelle de caoutchouc sur laquelle repose la sole du pied du cheval. On peut citer par exemple les brevets français 395645 et 788711. Cependant, le problème n'est pas résolu d'une manière satisfaisante, car la fourchette n'est pas toujours en appui fonctionnel. Les semelles sont rapportées et ne garnissent pas la totalité de l'intérieur de la sole.

Le problème étant ainsi posé, l'invention s'est proposé de supprimer les inconvénients des fers courants tout en favorisant la protection de la surface soléaire du pied et l'appui fonctionnel de la fourchette quel que soit son volume et la nature du terrain sur lequel évolue le cheval.

L'état de la technique peut également être illustré par les documents GB 1096415 et FR 2422330.

Le document GB 1096415, qui comporte les caractéristiques du préambule de la revendication 1, enseigne une solution apte à assurer la protection d'un sabot au moyen d'une enveloppe en matière plastique. Le sabot est positionné dans un moule dans lequel est injecté ladite matière.

Cette enveloppe de matière plastique recouvre seulement la face de contact avec la sole du sabot ainsi que sa périphérie externe. En aucun cas, la matière plastique ne pénètre à l'intérieur de la totalité du volume interne de la sole.

Le document FR 2422330, enseigne un patin sous forme d'un bloc en matière élastomère dont les dimensions extérieures correspondent à celles du fer. Ce patin présente, noyé dans son épaisseur, une armature de rigidité.

Là encore, la solution divulguée par ce document permet d'assurer un amortissement seulement au niveau du fer, mais ne tient pas compte du volume interne de la sole.

Le problème que se propose de résoudre l'invention est de favoriser la protection de la surface soléaire du pied et l'appui fonctionnel de la fourchette, quel que soit son volume et la nature du terrain sur lequel évolue le cheval.

Le but recherché est donc de rétablir, sur un pied ferré, les qualités physiques inhérentes au fonctionnement mécanique d'amortissement interne et externe naturel du pied du cheval, caractérisé par l'élasticité de la boîte cornée comme si elle se trouvait dans son contexte naturel, c'est-à-dire vierge de ferrure.

Pour résoudre le problème posé, le dispositif de réalisation d'un dispositif amortisseur selon l'invention, comprend en combinaison, un fer, une armature et une plaque de préforme, ladite armature étant conformée pour être fixée avec des agencements du fer, tandis que la plaque de préforme, qui est agencée pour autoriser l'injection d'une matière élastomère à l'intérieur de la totalité du volume de la sole, présente des agencements susceptibles de coopérer avec des organes d'assemblage pour sa fixation temporaire sur l'ensemble fer-armature, pour être enlevée après polymérisation de la matière élastomère.

Compte-tenue de ces dispositions, d'une manière particulièrement avantageuse, l'ensemble de la surface soléaire du pied ferré se trouve en liaison franche avec le sol, permettant d'absorber les violences des chocs, épargnant les vibrations de toute la machine de suspension naturelle du pied (os, articulations, tendons, muscles). Le dispositif facilite l'effort impulsif par la nature de la matière élastomère employée. Son application pallie aux déformations de la boîte cornée et tend à conserver la forme naturelle du pied.

De plus, il donne une sureté dactil à l'animal sur terrains variés et accidentés, métamorphosant l'allure et le geste du cheval, par la répartition des ondes de chocs sur l'ensemble de la surface du pied, encaissées jusqu'alors par la paroi uniquement par l'intermédiaire du fer.

L'invention est exposée ci-après plus en détail à l'aide des dessins.

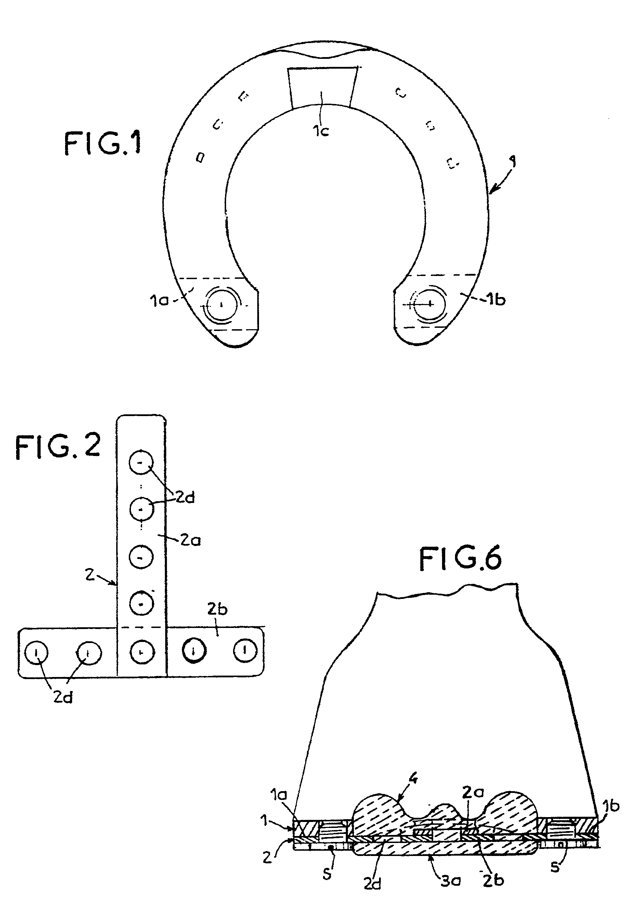

— La figure 1 est une vue en plan d'un fer à cheval agencé pour recevoir l'armature,
— la figure 2 est une vue en plan de l'armature,

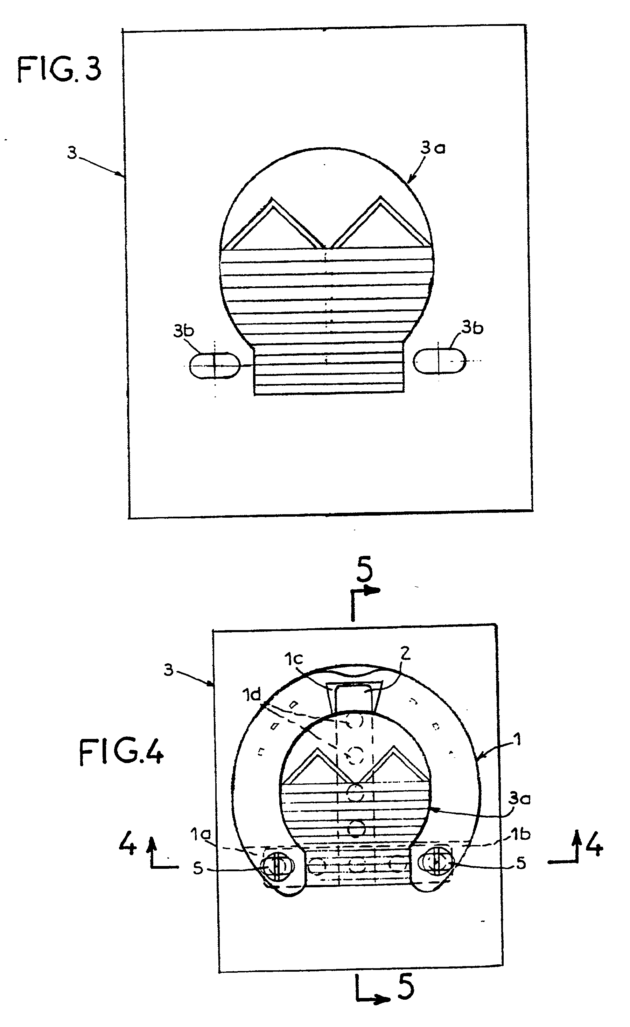

— la figure 3 est une vue en plan de la plaque de préformage,
— la figure 4 est une vue en plan montrant la fixation de l'armature et de la préforme,

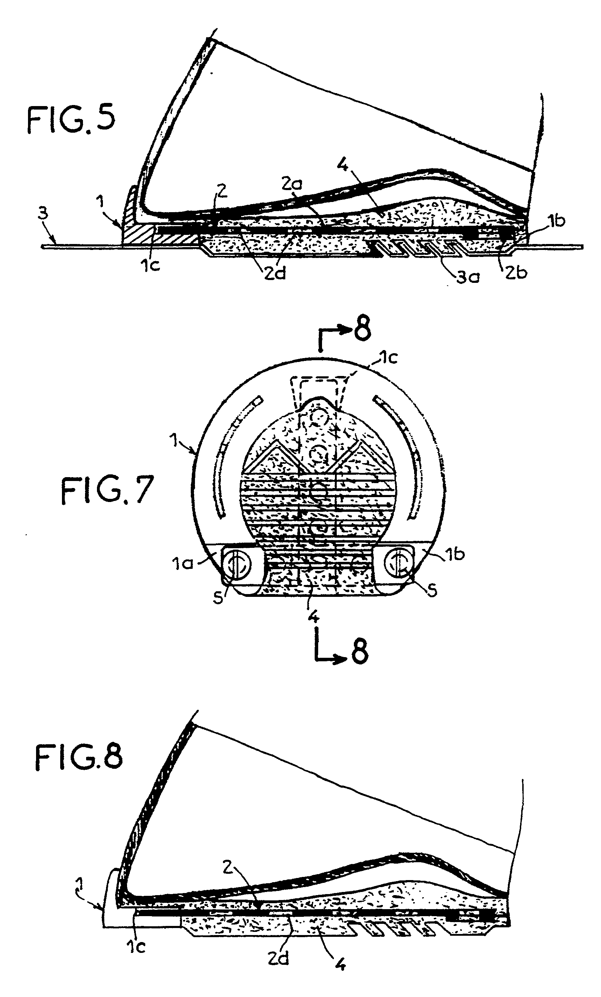

— la figure 5 est une vue en coupe longitudinale considérée selon la ligne 5.5. de la figure 4 après coulage de la matière élastomère,
— la figure 6 est une vue en coupe transversale considérée selon la ligne 6.6 de la figure 4 après coulage de la matière élastomère,
— la figure 7 est une vue en plan du fer équipé du dispositif, la plaque de préforme étant enlevée,
— la figure 8 est une vue en coupe considérée selon la ligne 8.8. de la figure 7.
— la figure 9 est une vue en plan montrant une forme de réalisation pour la fixation de l'armature.

Afin de rendre plus concret l'objet de l'invention, on le décrit maintenant d'une manière non limitative en se référant aux exemples de réalisation des figures des dessins.

Le dispositif amortisseur comprend en combinaison, les éléments essentiels suivants :
— un fer (1),
— une armature (2),
— une plaque de préforme (3), pour coulage d'une matière élastomère (4) à l'intérieur de la sole du sabot.

Les éponges du fer (1) présentent chacune, à proximité de leur extrémité libre, du côté interne ou externe, des encoches (1a) et (1b) tandis que le milieu de la couverture dudit fer, à la hauteur du poinçon médian, présente du côté interne, une encoche (1c). Ces encoches (1a), (1b) et (1c) sont conformées pour assurer le positionnement et la fixation de l'armature (2).

A cet égard, l'armature (2) a une forme générale en T. La branche médiane (2a) est logée dans l'encoche (1c) tandis que les extrémités de la branche transversale (2b) sont engagées dans les encoches (1a) et (1b) en y étant fixées au moyen par exemple de vis (5).

Les branches de l'armature (2) sont percées de part en part d'une pluralité de trous (2d) pour assurer l'interpénétration de la matière élastomère en vue de son accrochage.

A noter que l'armature (2) est réalisée directement en une seule opération telle que emboutissage ou en deux parties distinctes, puis assemblées par tout moyen connu. Cette trame est plate ou très légèrement galbée dans le sens transversal notamment. D'autres formes de la trame peuvent être prévues.

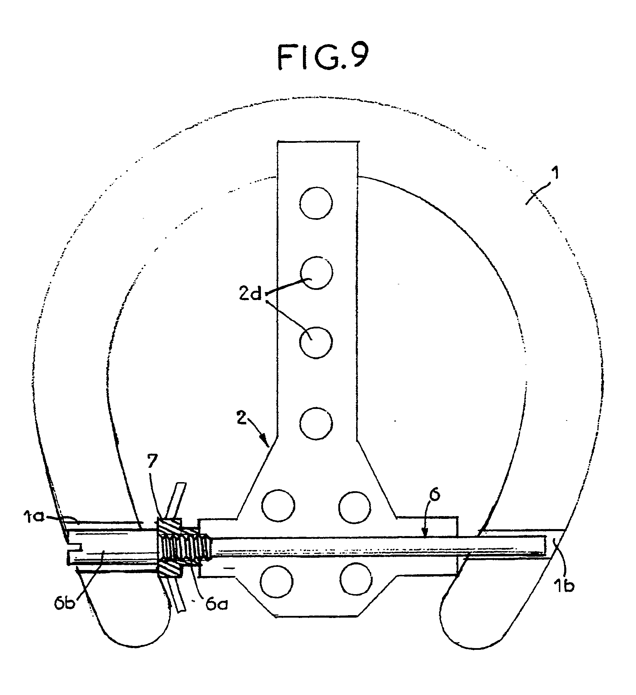

Par exemple, comme le montre la figure 9, l'armature (2) au niveau d'une partie de la branche transversale (2b) est solidaire d'une tige (6) qui coopère avec les encoches (1a) et (1b). Une partie de cette tige présente une portée filetée (6a) pour coopérer avec un système écrou interne (7). L'une des extrémités de la tige (6) est agencée en (6b) pour être manoeuvrée à partir de l'extérieur du fer en vue d'assurer la liaison entre l'armature (2) et ledit fer (1).

La préforme (3) est constituée par une plaque avec, très sensiblement dans sa partie médiane, une empreinte (3a) correspondant au pourtour interne du fer (1), ladite empreinte présentant des aspérités en creux et en relief pour constituer et délimiter une surface antidérapante. Cette préforme (3) qui correspond au volume négatif de l'amortisseur, présente des lumières (3b) susceptibles de coopérer avec les vis (5) de la trame, pour sa fixation temporaire. La plaque constituant la préforme (3) est très largement profilée dans le sens de la longueur, au niveau de la sole.

La préforme (3), réalisée par exemple par thermoformage est, d'une manière connue, agencée pour autoriser l'injection de la matière plastique devant garnir le volume interne de la sole. A cet effet, l'utilisation du dispositif selon l'invention est la suivante.

L'armature (2) est mise en place simultanément à la pose du fer (1). La branche (2b) est fixée par les vis (5) dans les agencements des éponges du fer (1) tandis que la branche libre (2a) est logée dans l'empreinte interne (1c) du fer au moment du montage sur celui-ci. A noter que la partie libre de la trame doit se trouver à deux millimètres de la fourchette au niveau du plan de la face supérieure du fer.

La préforme (3) est fixée en combinaison avec l'armature (2) de sorte que la partie anti-dérapante (3a) est située à l'intérieur du pourtour du bord interne du fer (1).

On injecte alors, au travers de la préforme (3) une matière thermo-plastique à l'état liquide, à l'intérieur de la totalité de l'empreinte soléaire du sabot. La matière choisie est conformée pour être apte à épouser les différents reliefs de la partie soléaire du pied du cheval, sans adhérer à celle-ci. La forme interne du pied est donc totalement et intégralement reproduite. L'armature (2) est noyée dans la matière plastique, les différents trous (2d) assurant la cohésion de l'ensemble.

Après polymérisation, la préforme (3) est enlevée de sorte que l'on obtient, un patin d'amortissement antidérapant d'appui au sol et conformé pour assurer la liaison franche avec le sol, de l'ensemble de la surface soléaire du pied ferré. Le volume général du patin correspond très exactement au volume interne de la sole délimitée par la fourchette du sabot et l'épaisseur du fer.

Compte-tenu de cette conception, le dispositif amortisseur est facilement démontable pendant la durée du ferrage. Il suffit de débloquer les vis de fixation de l'armature (2).

Dans la forme de réalisation illustrée, l'armature (2), notamment la branche transversale (2b), est fixée sur la face externe du fer (1).

On prévoit dans une réalisation en variante, d'adapter le dispositif amortisseur sur des fers d'une épaisseur inférieure à 8 mm. La rame est fixée sur les éponges du côté de la face supérieure du fer (1). Dans ce cas, compte-tenu de l'épaisseur réduite des fers, il en résulte un remplacement fréquent, de sorte que le caractère amovible du dispositif n'est pas nécessaire. La fixation de la trame peut se faire par rivetage, soudure, ou autrement.

Les avantages ressortent bien de la description. En particulier, on souligne, en plus de ceux déjà indiqués, que le dispositif augmente les performances du cheval sur tous les terrains et procure une adhérence parfaite et une protection de la partie soléaire aux objets contondants, une étanchéité aux infiltrations de sable et de graviers, évitant ainsi le phénomène de boitage dû à la neige.

## Revendications

1. Dispositif de réalisation d'un dispositif amortisseur pour sabots de chevaux notamment, équipés de fers, et comportant une plaque de préforme (3), caractérisé en ce qu'il comprend également un fer (1), et une armature (2), ladite armature (2) étant conformée pour être fixée avec des agencements du fer (1), tandis que la plaque de préforme (3) qui est agencée pour autoriser l'injection d'une matière élastomère à l'intérieur de la totalité du volume de la sole, présente des agencements (3b) susceptibles de coopérer avec des organes d'assemblage (5) pour sa fixation temporaire sur l'ensemble fer-armature, pour être enlevée après polymérisation de la matière élastomère.

2. Dispositif selon la revendication 1, caractérisé en ce que l'armature (2) a une forme générale en T notamment, et présente une pluralité de trous (2d) pour assurer la cohésion de la matière injectée, les branches (2a) et (2b) de ladite armature (2) étant positionnées et fixées en combinaison avec les agencements du fer (1).

3. Dispositif selon l'une quelconque des revendications 1 et 2, caractérisé en ce que les agencements du fer sont constitués par une encoche (1a)-(1b) formée à proximité des extrémités libre des éponges du fer et par une encoche (1c) formée dans le milieu de la couverture dudit fer, à la hauteur du pinçon médian, l'extrémité de la branche médiane coopérant en appui avec l'encoche (1c) tandis que les extrémités de la branche transversale (2b) coopèrent avec les encoches (1a) et (1b) en y étant fixées par des organes d'assemblage.

4. Dispositif selon la revendication 3, caractérisé en ce que les encoches (1a) et (1b) sont formées du côté de la face inférieure du fer, l'encoche (1c) étant formée du côté de la face supérieure.

5. Dispositif selon la revendication 3, caractérisé en ce que les encoches (1a) et (1b) sont formées du côté de la face supérieure du fer, l'encoche (1c) étant formée du côté de la face supérieure.

6. Dispositif selon la revendication 2, caractérisé en ce que la préforme (3) est constituée par une plaque profilée avec, dans sa partie médiane, une empreinte (3a) correspondant au pourtour interne du fer, ladite empreinte présentant des aspérités en creux et en relief, pour constituer et délimite une surface anti-dérapante.

7. Dispositif selon la revendication 6, caractérisé en ce que la préforme (3) présente des lumières coopérant avec les organes d'assemblage de l'armature.

8. Dispositif selon les revendications 1 et 6 ensemble, caractérisé en ce que la préforme est percée pour autoriser l'injection de la matière élastomère.

9. Dispositif selon la revendication 1, caractérisé en ce qu'après polymérisation, la matière élastomère injectée constitue un patin d'appui au sol dans lequel est noyée l'armature, le volume dudit patin correspondant très exactement au volume interne de la sole délimitée par la fourchette pour assurer la liaison franche de la surface soléaire du pied ferré.

## Patentansprüche

1. Einrichtung zum Fertigen einer Stossdämpfenvorrichtung für mit Eisenbeschlägen ausgestattete Pferdehufe, und die eine Vorformungsplatte (3) aufweist, dadurch gekennzeichnet, dass sie auch ein Hufeisen (1) und eine Verstrebung (2) aufweist, die zur Befestigung mit Ausstattungen des Hufeisens (1) ausgebildet ist, während die für das Einspritzen eines elastomerischen Materials in den panzen Innenraum der Fussohle eingerichtete Vorformungsplatte (3) Ausgestaltungen (3b) aufweist, die mit Zusammensetzungenorganen (5) für die vorläufige Befestigung der Vorformungsplatte auf die durch das Hufeisen und die Verstrebung gebildete Einheit mitwirken können, wobei die genannte Vorformungsplatte nach der Polymerisation des elastomerischen Materials abgenommen werden kann.

2. Einrichtung nach Anspruch 1, dadurch gekennzeichnet, dass die Verstrebung (2) im allgemeinen und insbesondere T-förmig ist, und eine Vielzahl von Löchern (2d) zum Sichern der Kohäsion des eingespritzten Materials aufweist, wobei die Schenkel (2a) und (2b) der genannten Verstrebung (2) in Kombination mit den Ausgestaltungen des Hufeisens (1) positioniert und befestig sind.

3. Einrichtung nach Anspruch 1 oder 2, dadurch gekennzeichnet, dass die Ausgestaltungen des Hufeisens aus einer in der Nähe der freien Enden der Hufeisenstollen gebildeten Einkerbung (1a)-(1b), sowie aus einer in der Mitte der Abdeckung des besagten Hufeisens, an der Höhe der mittigen Hufschneppe gebildeten Einkerbung (1c) bestehen, wobei das Ende des mittigen Schenkels abstützungsweise mit der Einkerbung (1c) zusammenwirkt, während die Enden des Querschenkels (2b) mit den Einkerbungen (1a) und (2b) auch zusammenwirken, und sind durch Zusammentzungsorgane daran befestigt.

4. Einrichtung nach Anspruch 3, dadurch gekennzeichnet, dass die Einkerbungen (1a) und (1b) auf der Seite der unteren Oberfläche des Hufeisens gebildet sind, während die Einkerbung (1c) auf der Seite der oberen Oberfläche gebildet ist.

5. Einrichtung nach Anspruch 3, dadurch gekennzeichnet, dass die Einkerbungen (1a) und (1b) auf der Seite der oberen Oberfläche des Hufeisens gebildet sind, während die Einkerbung (1c) auf der Seite der oberen Oberfläche gebildet ist.

6. Einrichtung nach Anspruch 2, dadurch gekennzeichnet, dass die Vorformungsplatte (3) aus einer profilierten Platte mit in ihrigem mittigen Teil einer dem innenseitigen Umfang des Hufeisens entsprechenden Einprägung (3a), wobei die gennante Einprägung mit vertieften und erhöhten Unebenheiten versehen ist, um eine Gleitschutzoberfläche zu bilden und zu begrenzen.

7. Einrichtung nach Anspruch 6, dadurch gekennzeichnet, dass die Vorformungsplatte (3) verschiedene Schlitze zum Mitwirken mit den Zusammensetzungsorganen der Verstrebung aufweist.

8. Einrichtung nach Ansprüchen 1 und 6 zusammen, dadurch gekennzeichnet, dass die Vorformungsplatte durchgebohrt ist, um das Einspritzen des elastomerischen Materials zu ermöglichen.

9. Einrichtung nach Anspruch 1, dadurch gekennzeichnet, dass das eingespritzte elastomerische Material, nach der Polymerisation, einen Erdbodenabstützungsschuh bildet, in welchem die Verstrebung eingebettet ist, wobei der Raum des genannten Abstützungsschuhs sehr genau dem Innenraum der durch die Gabelung abgegrenzten Fussohle entspricht, damit die einwandfreie Verbindung der Fussohlen Oberfläche des eisenbeschlagten Fusses gesichert wird.

**Claims**

1. System for making a shock-absorbing device, more particularly for use with horsehoofs, equipped with iron horseshoes, and comprising a pre-forming plate (3), characterized in that said system includes also an iron horseshoe (1) and a strut (2), said strut (2) being designed to be secured with the fittings of the iron horseshoe (1), while the pre-forming plate (3), which is arranged for permitting the injection of an elastomeric material within the entire volume of the sole-plate, is provided with fittings (3b) capable of co-operating with assembling organs (5) for the temporary securing thereof to the unit formed by the iron horseshoe and the strut, in order to be removed after the polymerization of the elastomeric material.

2. system as claimed in Claim 1, characterized in that the strut (2) is more particularly T-shaped, and is provided with a plurality of holes (2d) for ensuring the cohesiveness of the inkected material, the legs (2a) and (2b) of said strut (2) being positioned and secured in combination with the fittings of the iron horseshoe (1).

3. System as claimed in any one of claims 1 and 2, characterized in that the fittings of the iron horseshoe consist of a notch (1a-1b) formed adjacent to the free ends of the calkins of the iron horseshoe and of a notch (1c) formed in the midst of the covering of said iron horseshoe at the level of the middle toe-clips, the end of the middle leg co-operating in abutment with the notch (1c), while the ends of the transverse leg (2b) co-operate with the notches (1a) and (1b) and are secured thereto by means of assembling organs.

4. System as claimed in Claim 3, characterized in that the notches (1a) and (1b) are formed on the side of the lower face of the iron horseshoe, the notch (1c) being formed on the side of the upper face.

5. System as claimed in Claim 3, characterized in that the notches (1a) and (1b) are formed on the side of the upper face of the iron horseshoe, the notch (1b) being formed on the side of the upper face.

6. System as claimed in Claim 2, characterized in that the the pre-forming plate (3) consists of a contoured plate having in the middle portion thereof an imprint (3a) corresponding to the internal periphery of the iron horseshoe, said imprint being provided with sunken and raised asperities in order to form and to delimit a non-skid surface.

7. System as claimed in Claim 6, characterised in that the pre-forming plate (3) is provided with apertures co-operating with the assembling organs of the strut.

8. System as claimed in Claims 1 and 6 together, characterized in that the pre-forming plate is drilled in order to permit the injection of the elastomeric material.

9. System as claimed in Claim 1, characterized in that the injected elastomeric material, after the polymerization, forms a sole-piece of abutment to the ground, the strut being embedded into said sole-piece, the volume of which corresponds very accurately to the internal volume of the sole-plate delimited by the fork, in order to provide the faultless connection of the solear surface of the iron-shod foot.

FIG.1

1c

1

1a

1b

FIG.2

2d

2a

2

2b

2d

FIG.6

1a

4

2a

1

1b

2

2d

S

3a

2b

S

FIG.3

FIG.4

FIG.5

FIG.7

FIG.8

# FIG.9